Europäisches Patentamt

European Patent Office

Office européen des brevets

(19)

(11) Veröffentlichungsnummer : **0 090 090**
**B1**

(12) EUROPÄISCHE PATENTSCHRIFT

(45) Veröffentlichungstag der Patentschrift :
02.12.87

(21) Anmeldenummer : 82111751.2

(22) Anmeldetag : 17.12.82

(51) Int. Cl.⁴ : **F 16 K  1/44, B 67 C  3/22**

(54) Verfahren zum Reinigen von Hohlräumen in Doppelsitzventilen.

(30) Priorität : 30.03.82 DE 3211692

(43) Veröffentlichungstag der Anmeldung :
05.10.83 Patentblatt 83/40

(45) Bekanntmachung des Hinweises auf die Patenterteilung : 02.12.87 Patentblatt 87/49

(84) Benannte Vertragsstaaten :
DE FR GB IT NL SE

(56) Entgegenhaltungen :
DE-A- 2 433 501
DE-A- 2 643 273
DE-A- 2 840 447
DE-A- 3 017 085
DE-B- 2 457 756
DE-C-   893 595
GB-A- 1 592 732

(73) Patentinhaber : APV-Rosista GmbH
Zechenstrasse 49
D-4750 Unna (DE)

(72) Erfinder : Bräkelmann, Wolfgang, Ing.(grad)
Nordlünerner Strasse 105
D-4650 Unna-Lünern (DE)

## Beschreibung

Die Erfindung bezieht sich auf ein Verfahren zum Reinigen von Hohlräumen in Doppelsitzventilen mit einem von den Ventilsitzen gebildeten Leckageraum und einer von diesem nach außen geführten Leckflüssigkeitsleitung, wobei Reinigungsflüssigkeit in Einzelspritzstrahlen axial einem solchen Leckageraum zugeführt wird sowie auf ein Doppelsitzventil mit einer Reinigungsvorrichtung zur Durchführung des Verfahrens.

Mit der zunehmenden Automatisierung in der Getränkeindustrie wurde auch die Forderung nach einer automatischen Reinigung der Produktfließwege gestellt. In diesem Zusammenhang sind programmgesteuerte chemische Reinigungsverfahren entwickelt worden, deren Reinigungsablauf ferngesteuert eingeleitet werden kann. Hierzu werden Ventile eingesetzt, die sich für die anfallenden und genau festliegenden Betriebsabläufe in Funktion setzen lassen. Bei der Verwendung derartiger Ventile, beispielsweise in Tankbatterien, müssen die einzelnen Betriebsabläufe wie Füllen, Entleeren, Reinigen und Desinfizieren, auf einfache Weise durchführbar sein. Aufgrund der strengen Sicherheitsanforderungen ist dabei eine einwandfreie Trennung von Produkt und Reinigungsflüssigkeit erforderlich. Aus diesem Grunde werden insbesondere in der Getränkeindustrie Ventile mit zwei Ventiltellern eingesetzt. Die gegeneinander bewegbaren Ventilteller bilden einen Hohlraum, der mit einer Leckflüssigkeitsleitung in Verbindung steht, welche mit ihrem von den Ventilsitzen abweisenden Ende ins Freie führt. Auf diese Weise können Undichtigkeiten des Ventils infolge der nach außen austretenden Leckflüssigkeit rasch erkannt und behoben werden, bevor weiterer Schaden eintritt. Ein solches Doppelsitzventil ist beispielsweise aus der EP-A-0 060 910 (veröffentlicht am 29. September 1982) bekanntgeworden.

Zur Reinigung des von der Leckflüssigkeit gewählten Abflußbereiches ist es bereits bekannt, ein Spritzrohr innerhalb der nach außen geführten Leckflüssigkeitsleitung anzuordnen. Mit einem solchen Spritzrohr zur Beaufschlagung des Hohlraumes werden jedoch nicht alle Anforderungen in ausreichendem Maße erfüllt. Aus der benannten Entgegenhaltung DE-A-2 643 273 ist ein axialer Reinigungskanal bekannt, welcher außerhalb des Leckageraumes im Mantel des Ventilteils angeordnet ist. Anstelle dieses Reinigungskanals können auch einzelne in Umlaufrichtung des Teils mit Abstand zueinander verlaufende Kanäle, also Bohrungen, vorgesehen sein.

Der Spritzstrahl gelangt im äußeren Bereich der Leckagebohrung in den Ringspalt zwischen zwei Flächen und blockiert mehr oder weniger den Ablauf der abströmenden Flüssigkeit, die dann am Innenmantel des Rohres abläuft. Die untere Stirnseite des Ventiltellers wird nicht von der Spritzflüssigkeit berührt. Es kann auch nicht davon ausgegangen werden, daß der Spritzstrahl einen Kreissektor bildet, da dieser Strahl bei Einsatz von Bohrungen im dargestellten Außenbereich direkt gegen die senkrechte Fläche des Ringspaltes abgelenkt wird und sofort zerbricht, also undefinierbar zerfällt und abfließt. Der austretende Spritzstrahl hat aufgrund des kurzen Weges vom Austritt aus der Bohrung bis hin zur Wandung keine Möglichkeit, sich im Sinne der Erfindung als Kreisausschnitt zu formieren. Die Erfindung hat sich nun die Aufgabe gestellt, ein Verfahren zum Reinigen von Hohlräumen in Doppelsitzventilen zu schaffen, mit welchem in den von den bzw. zwischen den Ventilsitzen gebildeten Hohlräumen und den Innen- sowie Außenmantelflächen des nach unten abgeführten Leckagerohres eine einwandfreie Reinigung aller Mantelbereiche sichergestellt ist, wobei gezielt vorgesehene Turbulenzen auch die Bereiche mit Reinigungsflüssigkeit bestreichen sollen, die sonst nur unter besonderen Vorkehrungen erreichbar sind.

Diese der Erfindung zugrundeliegende Aufgabe wird mit einem Verfahren der eingangs genannten Art dadurch gelöst, daß die Reinigungsflüssigkeit im inneren Bereich der Leckflüssigkeitsleitung in mindestens drei symetrisch angeordnete Einzelspritzstrahlen axial zugeleitet und jeder Spritzstrahl im oberen Bereich des Leckageraumes von dessen Zentrum aus radial nach außen umgelenkt wird, daß jeder Spritzstrahl einen Leitstrahl bildet, der sich an die Außenwand des Leckageraumes in Umfangsrichtung in zwei Teilstrahlen verteilt, daß jeder Teilstrahl zusammen mit dem benachbarten Teilstrahl radial nach innen umgelenkt wird, wobei der Leitstrahl mit den rückströmenden Flüssigkeitsmengen einen Kreissektor bildet und dieser im unteren Bereich des Hohlraumes sowie an den Außenmantel der Leckflüssigkeitsleitung zurückgeführt wird, wobei alle den Leckageraum umschließenden Wandungsteile mit Reinigungsflüssigkeit beaufschlagt werden.

Das Doppelsitzventil mit einer Reinigungsvorrichtung zur Durchführung des erfindungsgemäßen Verfahrens mit zwei unabhängig voneinander bewegbaren Ventiltellern und einem von beiden Ventiltellern gebildeten Leckageraum mit einer von diesem nach außen geführten Leckflüssigkeitsleitung zeichnet sich dadurch aus, daß im unteren Bereich der Leckflüssigkeitsleitung an deren Innenmantel mindestens drei symetrisch zueinander und axial angeordnete Reinigungsdüsen vorgesehen sind, mittels welchen deren Spritzstrahlen annähernd parallel zum Innenmantel der Leckflüssigkeitsleitung bis in den Bereich des Leckageraumes geleitet, in Höhe der unteren Stirnseite des oberen Ventiltellers parallel zu dessen Stirnseite radial nach außen umgelenkt : siehe Anspruch 2 und auf der nach oben weisenden Stirnseite des unteren Ventiltellers sowie an dem inneren Außenmantel der Leckflüssigkeitsleitung zurückgeführt werden.

Mit dem erfindungsgemäß vorgeschlagenen Verfahren sowie der zur Durchführung des Verfahrens vorgeschlagenen Vorrichtung wird eine einwandfreie Reinigung der betroffenen Innenteile eines derartigen Doppelsitzventiles sichergestellt. Der Flüssigkeitsstrahl tritt in Teilbereichen parallel zur Innenwandung der Leckflüssigkeitsleitung in den von beiden Ventiltellern gebildeten Hohlraum ein und bestreicht während dieses Vorganges bereits in ausreichender Weise die betreffenden Innenmantelteile dieser Leckflüssigkeitsleitung. Im Anschluß daran wird der Strahl radial nach außen umgelenkt. Dieser Leitstrahl erreicht dabei auch komplizierte Ausbildungen des Außenbereichs eines Hohlraumes und wird dabei in zwei Teilstrahlen verteilt umgelenkt und bildet zusammen mit nach innen rückströmenden Flüssigkeitsmengen einen Kreissektor, der innerhalb eines bestimmten Bereiches ständig wandert, wodurch eine optimale Reinigungsturbulenz gewährleistet ist.

Im nachfolgenden wird die Erfindung anhand eines in der Zeichnung dargestellten Ausführungsbeispiels näher erläutert. In der Zeichnung zeigt :

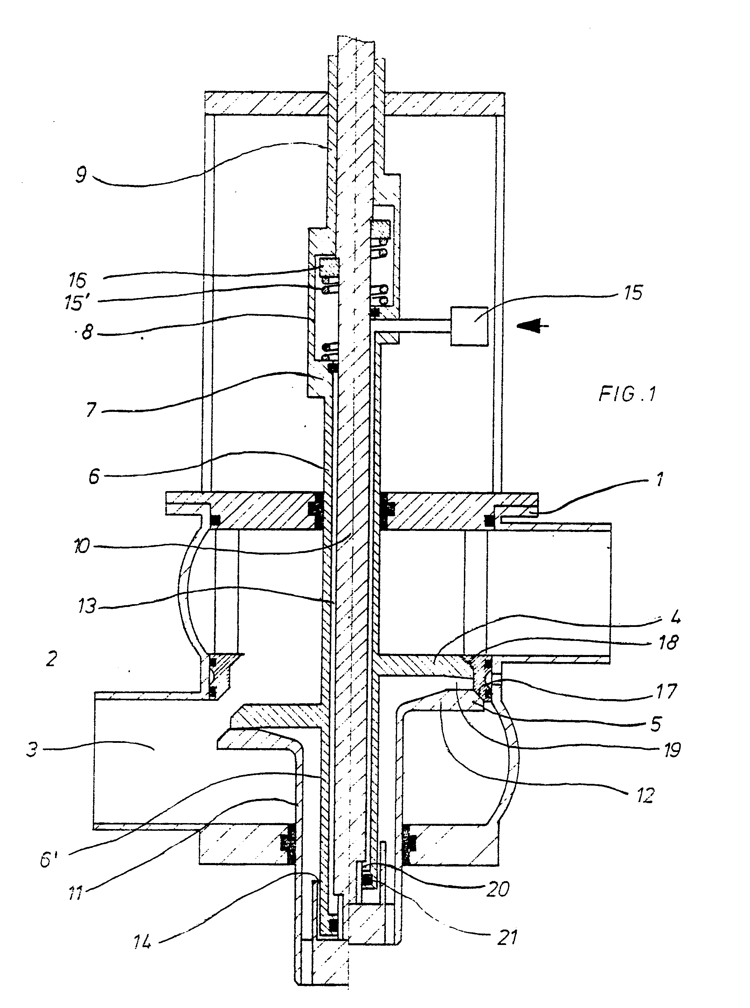

Fig. 1   einen Querschnitt eines Doppelsitzventils,

Fig. 2   eine Variante eines solchen Ventils mit Darstellung des von beiden Ventiltellern gebildeten Hohlraumes und

Fig. 3   eine Draufsicht des Hohlraumbereiches mit den sich ergebenden Flüssigkeitsströmungen.

Gemäß dem in der Zeichnung dargestellten Ausführungsbeispiel eines Doppelsitzventils zur Durchführung des Verfahrens besteht dieses aus einem Doppelgehäuse 1 mit ballig ausgebildeten Gehäusehälften 2, 3. Das Gehäuse ist als Mehrwegeverteiler ausgebildet und weist verschiedene Anschlüsse für ein Leitungssystem auf. Innerhalb des Doppelgehäuses 1 sind zwei voneinander unabhängig bewegbare Ventilkörper 4, 5 geführt. Der in Zeichnungsebene bzw. Einbaulage obere Ventilkörper 4 ist mit einer Hohlverstellstange 6 verbunden, die nach oben aus dem Doppelgehäuse 1 herausgeführt ist und eine Verdickung 7 aufweist. Mit dieser Verdickung 7 ist ein Rohr 8 verbunden, welches am oberen Ende lösbar mit der eigentlichen Kolbenstange 9 einer nicht weiter dargestellten Verstelleinrichtung verbunden ist. Innerhalb der Hohlverstellstange 6 ist eine Verstellstange 10 gelagert, die ihrerseits aus dem Gehäuse 1 herausgeführt ist und im unteren Bereich mit dem Leckageablaufrohr bzw. der Leckflüssigkeitsleitung 11 verbunden ist. Die Leckflüssigkeitsleitung 11 ist wiederum Bestandteil des in Zeichnungsebene-unteren Ventiltellers 12, welcher größer als der obere Ventilteller des Ventilkörpers 4 ausgebildet ist.

Die Hohlverstellstange 6 und die Verstellstange 10 bilden einen Ringspalt 13, der von der Verdickung 7 bis zum unteren Bereich der Verstellstange 10 verläuft. Diesem Ringspalt 13 schließt sich ein die Reinigungsflüssigkeit nach oben umlenkender Austrittskanal 14 an. Am oberen Ende des Ringspaltes 13 in Höhe der Verdickung 7 befindet sich der entsprechende Anschluß 15 für die Reinigungsflüssigkeit. Innerhalb des sich daran anschließenden Rohres 8 befindet sich eine Druckfeder 15′, die sich einerseits auf der Verdickung 7 und andererseits auf einem Steg 16 der inneren Verstellstange 10 anlegt. Aufgabe der Druckfeder 15′ ist es, den unteren größeren Ventilteller 12 gegen den zugeordneten Ventilsitz 17 bzw. bei Abheden des oberen Ventilkörpers 4 von seinem Sitz 18 gegen diesen anzupressen.

Sobald die Kolbenstange 9 durch Beaufschlagung des zugeordneten Verstellkolbens nach unten bewegt wird, hebt sich der Ventilkörper 4 von seinem Sitz ab und legt sich gegen den unter Federspannung stehenden unteren Ventilkörper 5, wodurch ein Hohlraum 19 zwischen beiden Ventiltellern geschaffen wird. Dieser Hohlraum (oder Leckageraum) ist mit der nach unten aus dem Ventilgehäuse herausgeführten Leckflüssigkeitsleitung 11 verbunden. Bei Reinigung dieses Bereiches wird die Reinigungsflüssigkeit durch den Ringspalt 13 und den zugeordneten Austrittskanal 14 entlang der Wandung 6 der verlängerten Hohlverstellstange geführt und erreicht den Hohlraum 19, aus dem sie entlang der gegenüberliegenden Wandung der Leckflüssigkeitsleitung 11 abfließt. Bei geschlossenem Ventil bzw. bei Anlage beider Ventilkörper 4, 5 an ihren Sitzen ist der dann gebildete größere Hohlraum ebenfalls mit Reinigungsflüssigkeit beaufschlagbar.

Im Bereich des Austrittskanals 14 befindet sich ein Absatz 20 auf der Verstellstange 10, mit dem ein Innenring 21 der Hohlverstellstange 6 korrespondiert. Aufgabe dieser Ausbildung ist es, ein Hängenbleiben des Ventilkörpers 5 in der Öffnungsstellung zu verhindern. Sobald·beide Ventilkörper 4, 5 aus der Öffnungsstellung in die Schließstellung bewegt werden, wird der untere Ventilkörper 5 durch Einflußnahme der Druckfeder 15′ mitbewegt. Sollte jedoch aus irgendwelchen Gründen ein Verklemmen des Ventilkörpers 5 vorliegen, so legt sich der Innenring 21 gegen den Absatz 20 und löst damit den Ventilkörper 5 aus seiner Verklemmung, so daß dieser wieder unter Einwirkung der Druckfeder 15′ in seine ordnungsgemäße Position bewegt wird.

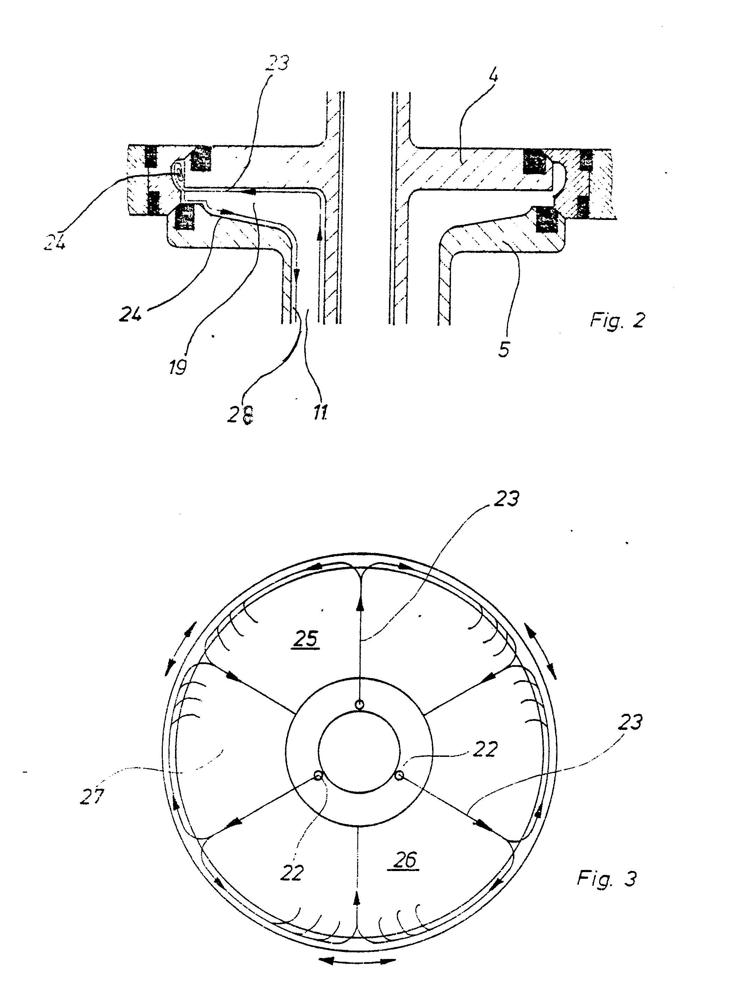

Am Ende des Austrittskanals 14 sind gemäß dem in Fig. 3 dargestellten Ausführungsbeispiel drei Reinigungsdüsenöffnungen 22 symetrisch vorgesehen. Bei Beaufschlagung dieser Düsen wird die Reinigungsflüssigkeit zunächst im inneren Bereich der Leckflüssigkeitsleitung 11 bzw. an deren Innenmantel gemäß Fig. 2 bis zum oberen Stirnseitenbereich des Hohlraumes 19 eingespritzt und dabei jeder Spritzstrahl derart umgelenkt, daß dieser, wie ebenfalls aus Fig. 2 ersichtlich, einen Leitstrahl gemäß Pfeil 23 bildet, welcher radial nach außen geführt ist und an den Außenwandungen 24 des Hohlraumes 19 umgelenkt wird. Dieser Leitstrahl 23 bildet mit den rückströmenden Flüssigkeitsmengen einen mit 25 bezeichneten Kreissektor, dessen Flüssigkeit sich mit der Flüssigkeit der jeweils angrenzenden Kreissektoren 26, 27 vermischt und im unteren Bereich des Hohlraumes 19 sowie am Außenmantel 28 der Leckflüssigkeitsleitung 11 nach außen zurückgeführt bzw. abgeleitet wird.

Der Leitstrahl trifft nach Umlenkung und einer entsprechenden Verdickung die außenwandungen 24 des Hohlraumes 19 und teilt sich entsprechend unter gleichzeitiger Bildung des vorerwähnten Kreissektors, dessen jeweilige Randströmungen sich mit den des benachbarten Kreissektors vermischen. Dabei findet insbesondere in den Grenzbereichen bzw. angrenzenden Bereichen der Kreissektoren 25-27 eine erhöhte Turbulenz statt, die ein einwandfreies Reinigen des Hohlraumes sicherstellt. Infolge der Turbulenz bewegen sich die Randbereiche der Kreissektoren 25-27 innerhalb der in Zeichnungsebene gemäß Fig. 3 dargestellten Fläche geringfügig hin und her, wodurch zusätzlich auch ein mechanischer Reinigungseffekt in den jeweiligen übereinander gelagerten Ebenen der Sitzstirnseiten bewirkt wird.

## Patentansprüche

1. Verfahren zum Reinigen von Hohlräumen in Doppelsitzventilen mit einem von den Ventilsitzen gebildeten Leckageraum (19) und einer von diesem nach außen geführten Leckflüssigkeitsleitung (11), wobei Reinigungsflüssigkeit in Einzelspritzstrahlen axial einem solchen Leckageraum (19) zugeführt wird, dadurch gekennzeichnet, daß die Reinigungsflüssigkeit im inneren Bereich der Leckflüssigkeitsleitung (11) in mindestens drei symetrisch angeordnete Einzelspritzstrahlen (23) zugeleitet und jeder Spritzstrahl (23) im oberen Bereich des Leckageraumes (19) von dessen Zentrum aus radial nach außen umgelenkt wird, daß jeder Spritzstrahl einen heitstrahl (23) bildet, der sich an die Außenwand des Hohlraumes in Umfangsrichtung in zwei Teilstrahlen verteilt, daß jeder Teilstrahl zusammen mit dem benachbarten Teilstrahl radial nach innen umgelenkt wird, wobei der Leitstrahl mit den rückströmenden Flüssigkeitsmengen einen Kreissektor (25-27) bildet und dieser im unteren Bereich des Leckageraumes (19) sowie an dem Außenmantel (28) der Leckflüssigkeitsleitung (11) zurückgeführt wird, wobei alle den Leckageraum (19) umschließenden Wandungsteile mit Reinigungsflüssigkeit beaufschlagt werden.

2. Doppelsitzventil mit einer Reinigungsvorrichtung zur Durchführung des Verfahrens nach Anspruch 1, mit zwei unabhängig voneinander bewegbaren Ventiltellern (12) und einem von beiden Ventiltellern (12) gebildeten Leckageraum (19) mit einer von diesem nach außen geführten Leckflüssigkeitsleitung (11), dadurch gekennzeichnet, daß im unteren Bereich der Leckflüssigkeitsleitung (11) an deren Innenmantel mindestens drei symetrisch zueinander und axial angeordnete Reinigungsdüsen (22) vorgesehen sind, mittels welchen deren Spritzstrahlen annähernd parallel zum Innenmantel der Leckflüssigkeitsleitung (11) bis in den Bereich des Leckageraumes (19) geleitet, in Höhe der unteren Stirnseite des oberen Ventiltellers (4) parallel zu dessen Stirnseite radial nach außen umgelenkt, an die Außenwand des Leckageraumes (19) in Umfangsrichtung in zwei Teilstrahlen verteilt, zwei benachbarten Teilstrahlen zusammen radial nach innen umgelenkt und auf der nach oben weisenden Stirnseite des unteren Ventiltellers (5) sowie an dem inneren Außenmantel (28) der Leckflüssigkeitsleitung (11) zurückgeführt werden.

## Claims

1. Method of cleaning cavities in double-seat valves provided with a seepage chamber (19), which is formed by the valve seats, and a seepage fluid line (11) which extends outwardly from said chamber, cleaning fluid being axially supplied to such a seepage chamber (19) in individual spray jets, characterised in that the cleaning fluid in the inner region of the seepage fluid line (11) is supplied in at least three symmetrically disposed individual spray jets (23), and each spray jet (23) in the upper region of the seepage chamber (19) is deflected radially outwardly from the centre of said chamber, in that each spray jet forms a guide jet (23) which is circumferentially divided into two partial jets at the outer wall of the cavity, in that each partial jet is deflected radially inwardly together with the adjacent partial jet, the guide jet forming a circular sector (25-27) with the returning amounts of fluid, and said sector in the lower region of the seepage chamber (19) and on the surface (28) of the seepage fluid line (11) is returned, whereby all the wall portions surrounding the seepage chamber (19) are covered with cleaning fluid.

2. Double-seat valve provided with a cleaning device for carrying out the method according to claim 1, having two valve plates (12), which are displaceable independently of each other, and a seepage chamber (19), which is formed by both valve plates (12) and is provided with a seepage fluid line (11) extending outwardly from said chamber, characterised in that at least three cleaning nozzles (22), which are disposed axially and symmetrically relative to one another, are provided in the lower region of the inner surface of the seepage fluid line (11), the spray jets of said nozzles being guided approximately parallel to the inner surface of the seepage fluid line (11) by said nozzles until they pass into the region of the seepage chamber (19), and, on a level with the lower end face of the upper valve plate (4), the spray jets are deflected radially outwardly parallel to the end face of said valve plate and are circumferentially divided into two partial jets at the outer wall of the seepage chamber (19), two adjacent partial jets together being deflected radially inwardly and being returned on the upwardly extending end face of the lower valve plate (5) and on the inner surface (28) of the seepage fluid line (11).

## Revendications

1. Procédé de nettoyage de cavités de soupapes à double siège, comprenant une enceinte de fuite (19) constituée par les têtes de la soupape et une conduite de liquide de fuite (11) partant de cette dernière vers l'extérieur, le liquide de nettoyage étant dirigé axialement sous forme de jets individuels dans une telle enceinte de fuite (19), caractérisé en ce que le liquide de nettoyage est envoyé dans la région interne de la conduite de liquide de fuite (11) sous forme d'au moins trois jets pulvérisés individuels disposés symétriquement (23), et chaque jet (23) est renvoyé radialement vers l'extérieur dans la région supérieure de l'enceinte de fuite (19) à partir de son centre, en ce que chaque jet forme un jet directeur (23) qui se subdivise contre la paroi extérieure de la cavité en deux jets partiels en direction périphérique, en ce que chaque jet partiel est renvoyé radialement vers l'intérieur avec le jet partiel voisin, le jet directeur formant avec les quantités de liquide revenant en arrière un secteur de cercle (25-27) et ce dernier étant renvoyé dans la région inférieure de l'enceinte de fuite (19) ainsi que contre l'enveloppe extérieure (28) de la conduite de liquide de fuite (11), toutes les parties de la paroi entourant l'enceinte de fuite (19) étant soumises au liquide de nettoyage.

2. Soupape à double siège à dispositif de nettoyage pour la mise en œuvre du procédé selon la revendication 1, comprenant deux têtes de soupape (12) pouvant se déplacer indépendamment l'une de l'autre et une enceinte de fuite (19) formée par les deux têtes de soupape (12), avec une conduite de liquide de fuite (11) partant de cette dernière vers l'extérieur, caractérisée en ce que dans la région inférieure de la conduite de liquide de fuite (11) sont prévues sur son enveloppe interne au moins trois buses de nettoyage (22) disposées axialement et symétriquement les unes par rapport aux autres, au moyen desquelles les jets sont dirigés sensiblement parallèlement vers l'enveloppe interne de la conduite de liquide de fuite (11) jusque dans la région de l'enceinte de fuite (19), sont renvoyés radialement vers l'extérieur à la hauteur de la face inférieure de la tête de soupape supérieure (4), parallèlement à cette face se subdivisent en deux jets partiels contre la paroi extérieure de l'enceinte de fuite (19) en direction périphérique, deux jets partiels voisins sont déviés ensemble radialement vers l'intérieur, et sont renvoyés en arrière sur la face dirigée vers le haut de la tête de soupape inférieure (5) ainsi que contre l'enveloppe extérieure interne (28) de la conduite de liquide de fuite (11).

FIG.1

Fig. 2

Fig. 3